# EUROPEAN PATENT APPLICATION

(11) **EP 4 312 156 A1**
(43) Date of publication of application: **31.01.2024**
(21) Application number: 23185926.5
(22) Date of filing: 17.07.2023
(51) Int. Cl.: G06N 3/045, G06N 3/09, G06N 3/092, G06N 20/00, G06Q 50/26

(54) **OUTCOME ASSESSMENT MODEL FOR ARTIFICIAL INTELLIGENCE DECISION MAKERS**

(30) Priority: 25.07.2022 US 202217873086
(71) Applicant: Rockwell Collins, Inc., Cedar Rapids, IA 52498 (US)
(72) Inventor: HERTZ, Benjamin J., Cedar Rapids (US); BERGER, Andrew K., Houston (US)
(74) Representative: Dehns

(57) **Abstract**

A computer-implemented system and method for deployment in a cockpit environment includes a trained intelligent decision maker (100) configured to generate real-time recommended actions to be taken to complete a task and an outcome assessor (200) deployable in conjunction with the intelligent decision maker configured to communicate with the intelligent decision maker to generate probability estimates of scenario outcomes based on the recommended actions with or without considering altered state data input by an operator. In use, the outcome assessor operates to provide the analytic data upon which the recommended actions are based and predicts the expected performance of the decision maker in actual and hypothetical scenarios.

## Description

### TECHNICAL FIELD AND BACKGROUND

The present disclosure relates generally to improvements to intelligent decision makers, and more particularly to an outcome assessment model deployable in conjunction with an intelligent decision maker operable to evaluate and predict expected performance of the decision maker, among other functions.

Missions such as aircraft fleet missions can be complex. To achieve mission success, operators (e.g., pilots) must be able to effectively manage numerous manned and unmanned aircraft while maintaining awareness of the constantly changing environment and assets under control. To alleviate operator workload, decision makers have been developed that make intelligent recommendations using artificial intelligence (AI).

AI-based decision makers are typically trained in a simulation environment using machine learning processes such as reinforcement learning (RL). In use, Al-based decision makers process stored and received data to recommend actions to be taken by an operator in real-time, for example, to complete a task, an objective, a mission, etc. Feedback of successes and failures may be part of the machine learning process and retraining.

While useful for managing complex missions, AI-based decision makers provide recommended actions without presenting the analytical data upon which the conclusion was based. As such, an operator must choose to follow or disregard a recommended action based on faith or lack thereof in the programming. Without having real-time access to complete information, the operator is not able to effectively evaluate key outcome likelihoods or perform "what if" scenarios in real time.

Therefore, what is needed is an analytic tool deployable in conjunction with an intelligent decision maker such that an operator is better informed to make decisions in real-time, for instance when executing a task or mission.

### BRIEF SUMMARY

According to a first inventive aspect, the present disclosure provides a computer-based system for deployment in an aircraft. The system includes an intelligent decision maker, trained in a simulation environment based on training data, and including processing circuitry configured to generate, in real-time, a recommended action to be taken to complete a task based on the training data and state data and display, by a first display, the recommended action to be taken to complete the task. The system further includes an outcome assessor deployable in conjunction with the intelligent decision maker and including processing circuitry configured to communicate with the intelligent decision maker, generate, in real-time, a probability estimate of an outcome of a scenario based on the training data gathered from the intelligent decision maker and altered state data, and display, by a second display, the probability estimate.

In some embodiments, the state data includes data associated with a current state of assets under control, data associated with a current state of the operating environment, and data associated with the task, and the altered state data includes at least one of altered data associated with the current state of assets under control, altered data associated with the current state of the operating environment, and altered data associated with the task.

In some embodiments, the outcome assessor is further configured to determine from the decision maker the training data and the state data upon which the generated recommended action to complete a task was based and cause the second display to display the determined training data and the state data.

In some embodiments, the outcome assessor is further configured to categorize each of the state data as positive contributing data or negative contributing data in the generated probability estimate, and display, by the second display, each of the categorized positive contributing data and the negative contributing data.

In some embodiments, the altered state data is a altered version of the state data upon which the displayed recommended action to be taken to complete the task was based.

In some embodiments, the second display is an interactive display operative to input the altered state data.

In some embodiments, the system is implemented in an aircraft cockpit.

According to another aspect the present disclosure provides a computer-implemented method for implementation in an aircraft, for instance in an aircraft cockpit. The method includes providing an intelligent decision maker trained in a simulation environment based on training data and generating a recommended action to be taken to complete a task based on the training data and state data. The method further includes providing an outcome assessor deployed in conjunction with the intelligent decision maker and gathering the training data and the state data from the intelligent decision maker and generating a probability estimate of an outcome of a scenario based on the gathered training data and altered state data. The recommended action and the probability estimate are displayed on separate displays such as separate screens of the same display.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated, and some features may be omitted or may be represented schematically in the interest of clarity. Like reference numerals in the drawings may represent and refer to the same or similar element, feature, or function. In the drawings:
FIG. 1 is a flow diagram illustrating outcome assessor data gathering from a trained intelligent decision maker and simulation performance in accordance with an embodiment of the inventive concepts disclosed herein;
FIG. 2 is a flow diagram illustrating the development of the outcome assessor in accordance with an embodiment of the inventive concepts disclosed herein;
FIG. 3 is a flow diagram illustrating the system architecture in accordance with an embodiment of the inventive concepts disclosed herein;
FIG. 4 illustrating OAM application to a simulated mission in accordance with an embodiment of the inventive concepts disclosed herein;
FIG. 5 is a graph illustrating positive and negative categorized data in accordance with an embodiment of the inventive concepts disclosed herein; and
FIG. 6 is a schematic diagram illustrating a display associated with the outcome assessor in accordance with an embodiment of the inventive concepts disclosed herein.

### DETAILED DESCRIPTION OF EXEMPLARY EMBODIMENTS

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, thus "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, the present disclosure provides embodiments of an outcome assessor, also referred to herein as an outcome assessment model or module (OAM), deployed in conjunction with an intelligent decision maker, for instance an artificial intelligence-based decision maker (AIDM). Applications include, but are not limited to, mission reasoner pilot aids and autonomy systems. In embodiments, the OAM is operable to convey data and probability outcomes associated with AIDM performance and outcome scenarios, for example, to determine acceptability of AIDM recommended actions in real-time. In embodiments, the OAM is developed to model the AIDM interaction with the current environment to generate outcome probability estimates, allowing the OAM to assess the AIDM effectiveness in a scenario. Providing the ability to change a scenario further enables an operator, for instance an aircraft pilot, to evaluate "what-if" scenarios. Combining the OAM with other explainability methods allows an operator to understand why the OAM determines a scenario is likely or unlikely to result in a particular outcome. The OAM of the present disclosure may be used in conjunction with and is applicable to various applications involving a learning-based decision maker.

Inventive aspects of the present disclosure include, but are not limited to, OAM development using supervised machine learning to predict AIDM expected performance in metrics understandable to an operator based on simulation results, using an OAM to evaluate AIDM performance in "what-if" scenarios to make informed "GO" or "NO GO" decisions, and using explainability methods to provide causal reasoning for operational state to AIDM expected performance.

An OAM according to the present disclosure can be developed for any outcome of interest including, but not limited to, mission success, resource health, fuel consumption, and timeliness. Benefits of the inventive aspects include, but are not limited to, generation of outcome predictions in real-time such that an operator can make an informed decision whether to follow or disregard an AIDM recommended action, generation of odds of success comparisons in ideal scenarios versus non-ideal scenarios (e.g., a resource is damaged or a weather event occurs). Causes of predictions may be explained to the operator in real time through explainability methods.

Computer-implemented systems and methods according to the present disclosure can be implemented in a computer environment generally including hardware processors, programmable logic devices, microcontrollers, memory devices and other hardware components configured to perform the tasks described herein. Other hardware components may include coupled memory devices configured to store instructions executable by the one or more hardware processors. Processors may include, but are not limited to, central processing units (CPUs), graphics processing units (GPUs), field programmable gate arrays (FPGAs), and application specific integrated circuit (ASICs). Memory devices may include, but are not limited to, random access memory (RAM), readonly memory (ROM) and other memory devices configured to store data and processor instructions for implementing various functionalities described herein. For example, the hardware processors may execute computer instructions stored in the memory device.

Regarding the AIDM, in some embodiments the AIDM is an intelligent decision maker trained in a simulation environment, implemented as a module sited onboard an aircraft, and tasked with decision making during a mission. The AIDM may receive input from a vehicle health system, mission phase analysis, and external assets to build an explainable decision network based on a knowledge database providing a decision aid. The AIDM operates to recommend actions to complete one or more tasks or mission objectives.

In embodiments, the AIDM includes or communicates with an interactive interface such as a human machine interface (HMI) onboard the aircraft. The HMI may include a display (e.g., a first display) including a screen and equipped with voice recognition, communications, aural warnings, and operator input output (I/O) functionality. The AIDM may be operable to assess a mission, assess asset health, analyze tasks associated with a mission, etc. The AIDM may communicate with a multi-vehicle health interface configured to monitor vehicle status of a plurality of vehicles offboard the aircraft, for instance unmanned drones.

In use, the AIDM operates to provide recommended actions to be taken to enhance task and/or mission success. Recommended actions may include "GO" decisions, "NO-GO" decisions, re-tasking decisions, and re-planning decisions, each dynamically updated during the mission. Actions are recommended based on the training data from the AIDM simulation training and received data from various state sources including, but not limited to, current state of assets under control (e.g., health of manned and unmanned aircraft, capabilities, fuel, etc.), current state of the environment (e.g., weather, hostiles, etc.), and mission metrics. The AIDM operates to analyze the current states with the mission phase to determine the recommended actions such as continue as planned, re-task, re-plan, etc.

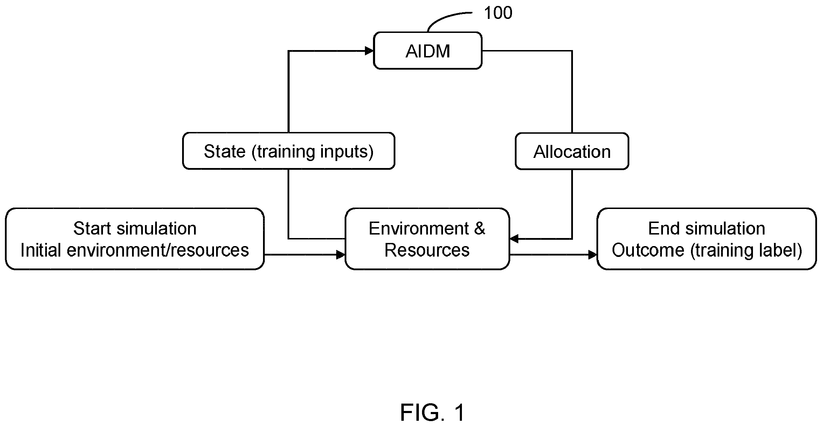

FIG. 1 is a flow diagram illustrating OAM training according to an embodiment. A supervised machine learning model configured to perform logistical regression may learn from the same simulation environment used to train the AIDM. With the AIDM 100 in the loop, outcomes from running the simulation with different state data are paired at each decision-making point to form label-data pairs. The simulation may be repeated many times to create a large, diverse labelled dataset. While the OAM communicates with the AIDM 100 to gather data, the AIDM 100 is static in deployment (i.e., no longer learns once deployed).

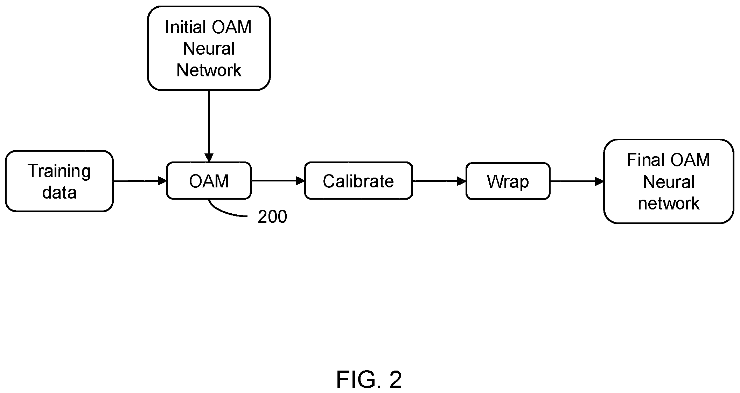

FIG. 2 is a flow diagram illustrating the development process of the OAM according to an embodiment. The OAM 200 is trained on the data generated by the trained AIDM. In embodiments, the system may be based on a neural network architecture. Data may be processed according to confidence calibration methods, e.g., temperature scaling to smooth predictions, to improve neural network accuracy, such as methods disclosed by Guo, C., Pleiss, G., Sun, Y., & Weinberger, K. Q. (2017), On Calibration of Modern Neural Networks, Proceedings of the 34th International Conference on Machine Learning. Sydney, Australia: ICML. In addition, integrated gradients may be applied to attribute the predictions to the inputs as disclosed by Sundararajan, M., Taly, A., & Yan, Q. (2017). Axiomatic Attribution for Deep Networks. Proceedings of the 34th International Conference on Machine Learning. Sydney, Australia: ICML.

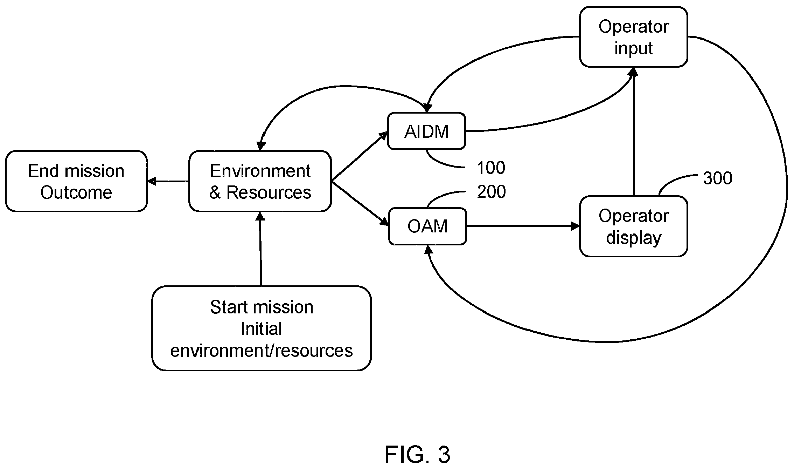

FIG. 3 is a flow diagram illustrating the deployed OAM architecture. State data associated with the environment and resources under control is output separately to each of the AIDM 100 and the OAM 200. As discussed above, the AIDM 100 is configured to recommend actions to be taken by the operator according to the AIDM training and current state of the environment and resources, and the operator can determine whether to follow or disregard each recommended action. Allocations can be made according to the recommended actions. The OAM 200, considering the same state data, is configured to determine the AIDM effectiveness in the scenario and convey the same to the operator via a separate operator display 300. In some embodiments, the AIDM and OAM are associated with separate operator displays, or alternatively the separate screens of the same display.

The operator has the ability to perform "what-if" scenarios by altering the environment and resource states. Thus, the probability estimates generated by the OAM can be performed with or without altered state data for comparison purposes. For example, an altered scenario may include removing a resource from a mission, and the probability estimate with and without the resource can be generated by the OAM and compared to determine a change in the odds of mission success with and without the resource. The AIDM 100 and the OAM 200 are decoupled in that the AIDM continues to operate as trained when deployed, and the OAM performs simulations from data gathered from the AIDM without altering the data.

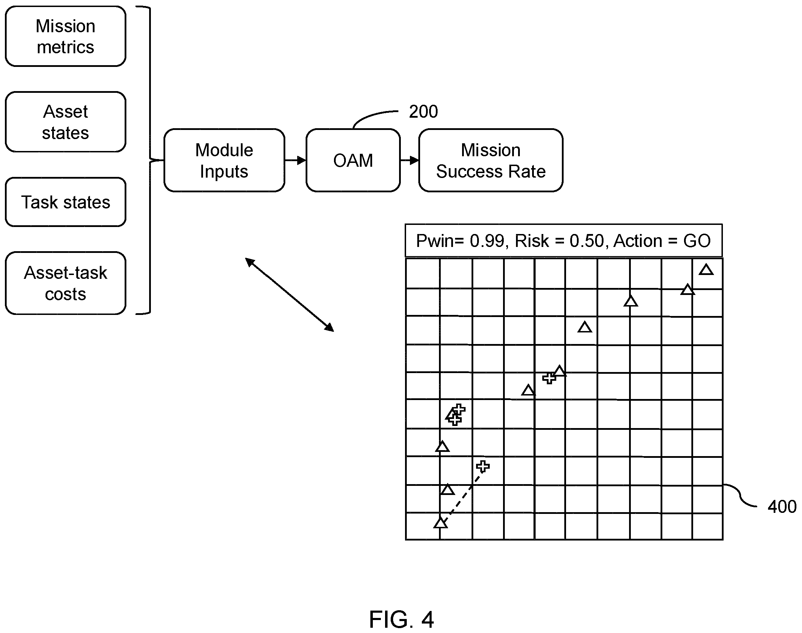

FIG. 4 illustrates OAM application to a simulated mission. A simulated mission plan 400 includes various tasks indicated as "Δ" and asset locations indicated as "+". Inputs to the OAM include, for example, mission state, manned aircraft state, unmanned aircraft state, etc. Tasks are completed sequentially, and the OAM 200 is configured to generate a prediction of mission success, such as the exemplary probability estimate indicated as a high likelihood at a Pwin = 0.99. The AIDM in conjunction provides an indication of Risk and the recommended action.

The determined probability estimate may cause the operator to follow the recommended action in the case of a high probability of success or cause the operator to make a change to the plan in the case of a low probability of success. Running a simulation based on an altered state returns a probability estimate for the altered state for consideration by the operator. The OAM conveys the probability estimate to the operator via a display. Altered simulations may be performed in real-time and the operator has the ability to modify states, revealed by the OAM, to run "what-if" scenarios. Probability estimates can be generated for task and/or objective completion. In some embodiments, the AIDM is configured to make step-by-step recommendations with allocations at each time step, and in parallel the OAM estimates the likelihood of task and/or mission success with explanation of the AIDM output.

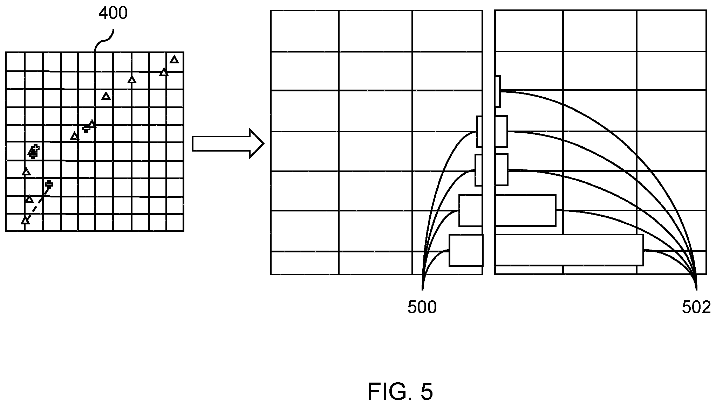

FIG. 5 illustrates classified states that are the cause of the recommended action and probability estimate. For example, states that negatively affect mission success are classified as negative states and are shown on the left at 500 while states that positively affect mission success are classified as positive states and are shown on the right at 502. Classifying the states and indicating their significance allows the operator to alter a particular state in a simulation to determine the impact of the altered asset on task or mission success.

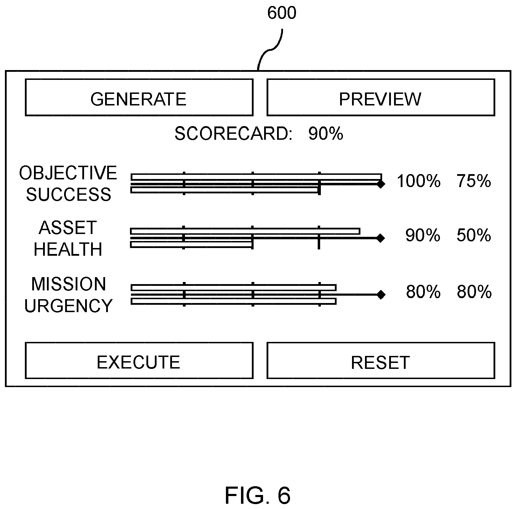

FIG. 6 illustrates a non-limiting example of a display concept 600 to compare mission plan outcome likelihoods, where individual OAMs provide probability estimates. As stated above, the OAM may communicate to a display separate from the display associated with the AIDM, such that the generated outputs are maintained separate. In alternative embodiments, the AIDM and OAM outputs may be conveyed together on a singular display. Operator inputs may include generation, preview, execute and reset inputs, among others. As shown, OAMs can be created for different outcomes of interest such as mission success, asset health, and mission urgency, among others. By altering a state, the operator has the ability to evaluate different scenarios and understand how those alterations are estimated to affect each different outcome of interest.

According to the method of the present disclosure, processing circuitry of the OAM generates the probability estimate(s) of task or mission success. The processing circuitry further operates to output the probability estimate(s) to the operator display. The probability estimate may include the most likely estimate and the estimate may be refined according to operator input received through the display. As discussed above, the AIDM and OAM operate separately such that their respective outputs are separate and traceable such that the OAM output can be used to retrain the AIDM to improve the performance of the AIDM.

While the foregoing description provides embodiments of the invention by way of example only, it is envisioned that other embodiments may perform similar functions and/or achieve similar results. Any and all such equivalent embodiments and examples are within the scope of the present invention and are intended to be covered by the appended claims.

## Claims

1. A computer-implemented system for deployment in an aircraft, comprising:
an intelligent decision maker (100), trained in a simulation environment based on training data, comprising processing circuitry configured to generate, in real-time, a recommended action to be taken to complete a task based on the training data and state data;
a first display configured to display the recommended action to be taken to complete the task;
an outcome assessor (200) deployable in conjunction with the intelligent decision maker and comprising processing circuitry configured to communicate with the intelligent decision maker and generate, in real-time, a probability estimate of an outcome of a scenario based on the training data gathered from the intelligent decision maker with or without altered state data; and
a second display configured to display the probability estimate.

2. The computer-implemented system according to claim 1, wherein:
the state data comprises data associated with a current state of assets under control, data associated with a current state of the operating environment, and data associated with the task; and
the altered state data comprises at least one of altered data associated with the current state of assets under control, altered data associated with the current state of the operating environment, and altered data associated with the task.

3. The computer-implemented system according to claim 1 or 2, wherein the outcome assessor (200) is further configured to determine the training data and the state data upon which the generated recommended action to complete the task was based and cause the second display to display the determined training data and the state data.

4. The computer-implemented system according to claim 3, wherein the outcome assessor (200) is further configured to categorize each of the state data as positive contributing data or negative contributing data in the generated probability estimate and cause the second display to display each of the categorized positive contributing data and the negative contributing data.

5. The computer-implemented system according to claim 3 or 4, wherein the altered state data is a hypothetical version of the state data upon which the displayed recommended action to be taken to complete the task was based.

6. The computer-implemented system according to any preceding claim, wherein the second display is operative to input the altered state data.

7. The computer-implemented system according to any preceding claim, implemented in an aircraft cockpit.

8. A computer-implemented method for implementation in an aircraft, comprising the steps of:
providing an intelligent decision maker trained in a simulation environment based on training data;
providing a first display associated with the intelligent decision maker;
generating, by processing circuitry of the intelligent decision maker, a recommended action to be taken to complete a task based on the training data and state data;
displaying, by the first display, the generated recommended action to be taken to complete the task;
providing an outcome assessor and deploying the outcome assessor in conjunction with the intelligent decision maker;
providing a second display associated with the outcome assessor;
gathering, by processing circuitry of the outcome assessor, the training data from the intelligent decision maker;
generating, by the processing circuitry of the outcome assessor, a probability estimate of an outcome of a scenario based on the gathered training data with or without altered state data; and
displaying, by the second display, the probability estimate of the outcome of the scenario.

9. The computer-implemented method according to claim 8, wherein:
the state data comprises data associated with a current state of assets under control, data associated with a current state of the operating environment, and data associated with the task; and
the altered state data comprises at least one of altered data associated with the current state of assets under control, altered data associated with the current state of the operating environment, and altered data associated with the task.

10. The computer-implemented method according to claim 8 or 9, further comprising the steps of:
determining, by the processing circuitry of the outcome assessor, the training data and the state data upon which the generated recommended action to complete the task was based; and
displaying, but the second display, the determining training data and the state data.

11. The computer-implemented method according to claim 9 or 10, further comprising the step of:
categorizing, by the processing circuitry of the outcome assessor, each of the state data as positive contributing data or negative contributing data in the generated probability estimate; and
displaying, by the second display, each of the categorized positive contributing data and the negative contributing data.

12. The computer-implemented method according to any of claims 8 to 11, wherein the altered state data is a altered version of the state data upon which the displayed recommended action was based.

13. The computer-implemented method according to any of claims 8 to 12, wherein each of the recommended action to be taken to complete a task and the probability estimate of the outcome of the scenario are generated in real-time.

14. The computer-implemented method according to any of claims 8 to 13, wherein the second display is operative to input the altered state data.

15. The computer-implemented method according to any of claims 8 to 14, implemented in an aircraft cockpit.
